# FASCICULE DE BREVET EUROPEEN

(11) **EP 3 913 322 B1**
(45) Date de publication et mention de la délivrance du brevet: **09.11.2022**
(21) Numéro de dépôt: 21174861.1
(22) Date de dépôt: 19.05.2021
(51) Int. Cl.: G01B 11/00, B23Q 17/24, B25J 11/00, G05B 19/418, G06T 7/00

(54) **PROCÉDÉ POUR LE CONTRÔLE D'UNE PIÈCE EN COURS DE FABRICATION**
VERFAHREN ZUR KONTROLLE EINES WERKSTÜCKS WÄHREND SEINER HERSTELLUNG
METHOD FOR CONTROLLING A PART DURING MANUFACTURING

(30) Priorité: 20.05.2020 FR 2005384
(43) Date de publication de la demande: 24.11.2021
(73) Titulaire: Ipside Innovation Inc., Las Vegas, NV 89129 (US)
(72) Inventeur: Nozais, Dominique, 84120 Pertuis (FR); Peuzin-Jubert, Manon, 13100 Aix en Provence (FR); Pernot, Jean-Philippe, 13090 Aix En Provence (FR); Polette, Arnaud, 13100 Aix en Provence (FR); Mari, Jean-Luc, 13008 Marseille (FR)
(74) Mandataire: Ipside

(56) Documents cités:
- MICHELE GERMANI ET AL: "Automation of 3D view acquisition for geometric tolerances verification", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27 septembre 2009 (2009-09-27), pages 1710-1717, XP031664519, ISBN: 978-1-4244-4442-7
- SAHA M ET AL: "Planning multi-goal tours for robot arms", PROCEEDINGS / 2003 IEEE INTERNATIONAL CONFERENCE ON ROBOTICS AND AUTOMATION : SEPTEMBER 14 - 19, 2003, THE GRAND HOTEL, TAIPEI, TAIWAN; [PROCEEDINGS OF THE IEEE INTERNATIONAL CONFERENCE ON ROBOTICS AND AUTOMATION], IEEE SERVICE CENTER, PISCATAWAY, NJ, vol. 3, 14 septembre 2003 (2003-09-14), pages 3797-3803, XP010668317, DOI: 10.1109/ROBOT.2003.1242179 ISBN: 978-0-7803-7736-3

## Description

### Domaine technique

L'invention concerne le domaine de la fabrication, plus particulièrement, mais non exclusivement, la fabrication additive, l'usinage par enlèvement de matière ou la combinaison de ces modes de fabrication.

L'invention porte plus particulièrement sur le contrôle dimensionnel ou géométrique automatisé d'une pièce réalisée par ce type de procédé sur machine-outil, entre deux opérations de fabrication, c'est-à-dire sans démontage ou repositionnement de la pièce contrôlée dans la machine et sans modification de la configuration de la machine.

Plus spécifiquement, l'invention porte sur un procédé permettant l'acquisition optimisée des surfaces de la pièce à contrôler, pour une pièce donnée, dans un environnement machine défini et au moyen d'un capteur spécifique.

L'invention est cependant applicable à d'autres situations par exemple au contrôle d'une pièce montée sur palette dans une cellule de fabrication palettisée comprenant un poste de contrôle automatisé.

### Technique antérieure

La fabrication d'une pièce comprend, selon des exemples de mise en œuvre, des étapes de mise en forme, organisées selon une gamme de fabrication, mettant en œuvre une ou plusieurs machines-outils opérant par enlèvement de matière, par addition de matière ou par déformation, sur un brut ou une ébauche, afin de créer des formes définies géométriquement et rapprocher progressivement la forme de ladite pièce de sa forme finale.

Par convention, une gamme de fabrication est divisée en une succession de phases et comprend au moins une phase.

Chaque phase est divisée en une succession d'opérations, une phase comprenant au moins une opération.

Ainsi, sur machine-outil, une phase correspond à une succession d'opérations de mise en forme, par addition ou enlèvement de matière, au cours desquelles le positionnement de la pièce dans la machine-outil n'est pas modifié, et au cours desquelles la configuration de la machine n'est pas modifiée.

Une opération correspond à une séquence de mise en forme au cours d'une même phase réalisée sans changement d'outil ou d'effecteur.

La mise en œuvre d'un contrôle dimensionnel entre deux opérations ou entre deux phases de mise en forme sur machine-outil est courante que ce soit en fabrication unitaire ou en fabrication de série automatisée.

Cette opération de contrôle vise à vérifier l'adéquation du réglage de la machine en regard des caractéristiques attendues de la pièce et en fonction du résultat, de modifier ces réglages, ou même de rebuter la pièce à un stade précoce de sa fabrication.

Pour des raisons de précision de cette chaîne de correction, mais aussi pour des questions de productivité, il est avantageux que l'opération de mesure soit réalisée sans démontage de la pièce, c'est-à-dire dans une même phase, et, le cas échéant entre deux opérations de fabrication.

Ainsi, l'opération de mesure est réalisée *in-situ* c'est-à-dire que la pièce est contrôlée dans son environnement de fabrication, directement dans la machine-outil ou dans la cellule de transfert sans démontage de la pièce de son support porte pièce entre l'opération de contrôle et l'opération précédente.

Selon un exemple de mise en œuvre, l'opération de mesure comprend l'acquisition, par l'intermédiaire d'un capteur optique ou autre, porté par un robot, d'un nuage de points sur une ou plusieurs surfaces de la pièce à contrôler.

La pièce étant contrôlée dans son environnement machine, par définition encombré, la réalisation automatique de l'opération de mesure implique de positionner le capteur permettant de réaliser l'acquisition du nuage de points, de sorte que ledit capteur puisse « voir » les surfaces à contrôler.

De plus, dans certaines circonstances, la configuration de l'environnement ne permet pas d'assurer la totale visibilité des surfaces à contrôler selon un point de vue unique, et le capteur doit réaliser plusieurs acquisitions selon différents points de vue pour assurer cette couverture.

Le capteur est ainsi associé à un effecteur, robot ou manipulateur, apte à déplacer ledit capteur dans l'environnement de la machine.

Dans le cas d'un bras manipulateur ou d'un robot externe à la machine, celui-ci est amené dans l'environnement machine préalablement à l'opération de mesure, puis en est dégagé à l'issue de l'opération de mesure.

Le positionnement adapté de la pièce et de ses surfaces à contrôler par rapport au capteur d'acquisition est également réalisable par le déplacement de la pièce, sur son porte-pièce, dans l'espace de la machine ou de la cellule transfert.

Selon l'art antérieur le contrôle automatique d'une pièce est généralement réalisé sur une machine à mesurer tridimensionnelle, c'est-à-dire dans un environnement quasi idéal en termes d'encombrement et d'accessibilité des surfaces par le capteur de mesure, la pièce étant montée sur un support de mesure spécifique et donc démontée de son support porte pièce qui est utilisé pour l'usinage.

Dans la mise en œuvre de ce procédé de l'art antérieur, il est connu d'optimiser la réalisation de la mesure, c'est-à-dire de déterminer par un algorithme, une minimisation du nombre d'acquisitions.

Mathématiquement le problème s'énonce de la manière suivante : étant donné Sun ensemble d'éléments {1,2,3,...,n}, représentant l'ensemble des surfaces de la pièce concernées par la mesure et *A* une liste de sous-ensembles correspondant aux surfaces pouvant faire l'objet d'une acquisition par le moyen de mesure, et dont l'union desdits sous-ensembles est égale à *S*, on cherche la plus petite liste de sous-ensembles dans *A* tel que l'union de cette liste soit égale à *S.*

Il s'agit d'un problème d'optimisation dit NP-complet dont la difficulté de résolution, et par suite le temps de résolution, augmentent de manière exponentielle avec le nombre de données.

Ce problème à résoudre devient encore plus complexe dans le cas d'une mesure in-situ, où, pour une pièce donnée l'environnement, en général encombré, est de plus modifiable, soit parce que la pièce est réalisée sur plusieurs machines différentes, soit parce que la configuration de la machine est susceptible de changer, notamment entre les phases de fabrication.

Le document Michèle Germani et al. « Automation of 3D view acquisition for geometric tolerances vérification» IEEE 12th International Conférence on Computer Vision Workshops, 27 septembre 2009, ISBN : 978-1-4244-4442-7 décrit un système de mesure automatique des tolérances géométriques utilisable lors de la phase de conception d'une pièce. Il est basé sur trois outils principaux : un outil logiciel modulaire basé sur la CAO, afin de simuler et piloter l'ensemble du processus de vérification, un capteur optique comme système d'acquisition de la forme de la pièce, et un robot multi-axes apte à déplacer ledit capteur.

### Exposé de l'invention

L'invention vise à définir pour un couple pièce et capteur de mesure/acquisition donné, les positions spatiales relatives du capteur et de la pièce permettant l'acquisition des surfaces de la pièce nécessaires à la réalisation d'un contrôle.

Le résultat du procédé objet de l'invention permet pour ce couple capteur/pièce de déterminer pour n'importe quelle machine dans laquelle la pièce est réalisée et pour n'importe quel effecteur, notamment un robot, supportant le capteur de mesure, une séquence d'acquisition optimisée, minimisant le nombre, d'acquisitions, pour réaliser une mesure faisant intervenir une ou plusieurs surfaces de la pièce.

À cette fin, l'invention concerne un procédé pour le contrôle dimensionnel ou géométrique d'une ou plusieurs faces d'une pièce montée dans un montage de fabrication entre deux opérations de fabrication, par des moyens comprenant :
- un capteur de mesure adapté à l'acquisition de points sur la face de la pièce objet du contrôle, défini par une distance d'acquisition, un volume d'acquisition et un cône de direction d'acquisition depuis une position fixe ;
- un robot, apte à supporter et à déplacer le capteur ;
- un ordinateur comprenant des moyens de mémoire, des moyens de calculs et des moyens d'affichage, comprenant dans ses moyens de mémoire un modèle numérique tridimensionnel de la pièce, et apte à acquérir les coordonnées des points acquis par le capteur ;
   lequel procédé comprend des étapes, mises en œuvre par l'ordinateur, consistant à :
   i. obtenir un modèle numérique de la pièce comprenant la face à contrôler et échantillonner ce modèle en un nuage de points par tessalation des faces dudit modèle CAO ;
   ii. obtenir les caractéristiques du capteur ;
   iii. créer un graphe de visibilité *GV* de la pièce à contrôler en :
   iii.a segmentant le modèle numérique de la pièce en nœud, chaque nœud étant compris dans le volume d'acquisition du capteur et dont les normales sont à l'intérieur du cône d'acquisition dudit capteur ;
   iii.b déterminant la visibilité de chaque nœud depuis chaque position relative du capteur par rapport audit nœud ;
   iii.c déterminant des visibilités communes, ou arêtes, entre les nœuds, deux nœuds étant liés par une arête lorsqu'une acquisition, réalisée dans une position relative fixe du capteur par rapport à la pièce, permet de couvrir simultanément une partie au moins de la surface de chacun des deux nœuds ;
   iv. à partir du graphe de visibilité obtenu à l'étape iii) définir une séquence d'acquisitions permettant de couvrir la ou les faces en un nombre réduit d'acquisitions en recouvrement en définissant le chemin reliant tous les nœuds de la ou des faces par un nombre minimum d'arêtes dans le graphe de visibilité ;
   v. mettre en œuvre la séquence d'acquisition définie à l'étape iv) au moyen du robot en déplaçant le capteur de mesure ou la pièce sur son montage entre les positions permettant de réaliser la séquence d'acquisition.

Ainsi le procédé objet de l'invention permet de ramener le problème NP-complet de la détermination d'une séquence d'acquisition optimisée à un problème de résolution de chemin dans un graphe, problème pour lequel il existe des algorithmes et des heuristiques de résolution robustes.

L'échantillonnage du modèle CAO par tessalation permet de réaliser les étapes iiia) à iiic) par des opérations de classement des points dans des fichiers.

Avantageusement, le fichier CAO utilisé à l'étape i) correspond à l'état de la pièce dans la gamme de fabrication au moment de l'opération de contrôle.

Avantageusement, l'étape iiia) comprend, pour une face, la segmentation du nuage de points par dichotomie selon le cône de direction d'acquisition du capteur et selon le volume de mesure du capteur.

Ce mode de mise en œuvre récursif par dichotomie permet de segmenter rapidement le nuage de points.

Avantageusement, la segmentation du nuage de points comprend une étape consistant à obtenir un graphe de connectivité des faces du modèle CAO de la pièce, et dans lequel l'étape iiia) comprend les étapes consistant à :
- réaliser la segmentation d'une première face ;
- explorer le voisinage des nœuds ainsi créés dans une deuxième face voisine de la première face selon le graphe de connectivité ;
- lorsque le nuage de points de la deuxième face et non déjà inclus dans un nœud et que les points d'un nœud de la première face entrent dans le volume d'acquisition et le cône de direction d'acquisition du capteur, intégrer les points de la deuxième face dans le nœud de la première face.

Ce mode de réalisation permet de réduire le nombre de nœuds et ainsi de réduire le nombre d'acquisitions nécessaires pour le contrôle de la pièce ainsi que de réduire le temps de calcul.

Avantageusement l'étape iiib) comprend les étapes mises en œuvre par l'ordinateur consistant à :
- définir au moyen de la distance d'acquisition du dispositif de mesure un espace voxelisé autour de la pièce ;
- projeter depuis chaque nœud des rayons contenus dans le cône de direction d'acquisition du capteur centré sur la normale au nœud ;
- déterminer les voxels traversés par un rayon ;
- . déterminer une cartographie de la visibilité de chaque face, à partir des voxels ainsi traversés par un rayon.

Ce mode de mise en œuvre permet de cartographier l'espace de visibilité de la pièce depuis le capteur indépendamment de l'environnement machine.

Selon un mode de réalisation, pour la mise en œuvre de l'étape iiib), l'espace voxelisé comprend un ensemble de voxels contenant la pièce et la projection des rayons est réalisée depuis chaque voxel de cet ensemble comprenant une portion de nœud en utilisant la normale à cette portion de nœud comprise dans ledit voxel.

Avantageusement, l'étape iv) comprend la détermination d'un sous-graphe de visibilité *GVbis* du graphe de visibilité *GV* par la mise en œuvre d'étapes consistant à :
a. déterminer les nœuds couvrant les faces à contrôler ;
   1. calculer, à partir du graphe de visibilité *GV,* les chemins les plus courts reliant un desdits nœuds aux autres nœuds des faces à contrôler ;
   2. répéter l'étape b) pour chacun des nœuds déterminés à l'étape a) en écartant successivement les nœuds déjà traités ;
   3. à partir du résultat de l'étape c) déterminer un graphe *GVbis* optimisé minimisant le nombre d'arêtes de *GV* d'un chemin passant par tous les nœuds déterminés en a).

Ce mode de réalisation permet de déterminer rapidement un nombre minimisé d'acquisitions.

Selon un mode de réalisation, le montage de fabrication est à l'intérieur d'une machine-outil comprenant une zone de travail et le robot est apte à accéder et à déplacer le capteur dans l'espace de travail de la machine et l'étape v) est réalisée dans l'espace de travail de la machine-outil.

Selon ce mode de réalisation, l'étape v) comprend le déplacement de la pièce dans la zone de travail de la machine.

Selon une variante de mise en œuvre, le montage de fabrication est palettisé et permet le déplacement de la pièce dans son montage entre différents postes de fabrication.

### Description sommaire des dessins

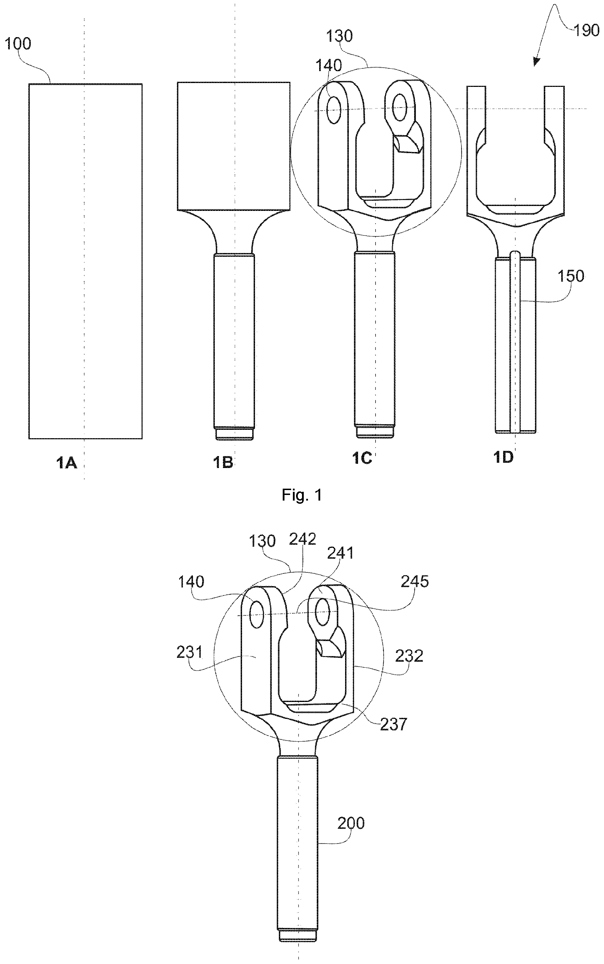

L'invention est exposée ci-après selon ses modes de réalisation préférés, nullement limitatifs et en référence aux figures 1 à 14 dans lesquelles:
**Fig.1** la figure 1, à vocation illustrative est un exemple d'une pièce réalisée par enlèvement de matière et mettant en œuvre des opérations de contrôle mettant en œuvre le procédé objet de l'invention, représentée aux étapes 1A à 1D de sa réalisation ;
**Fig.2**
   la figure 2 montre la pièce de la figure 1 dans une configuration d'avancement de la gamme de fabrication au cours de laquelle une opération de contrôle est réalisée ;
**Fig.3**

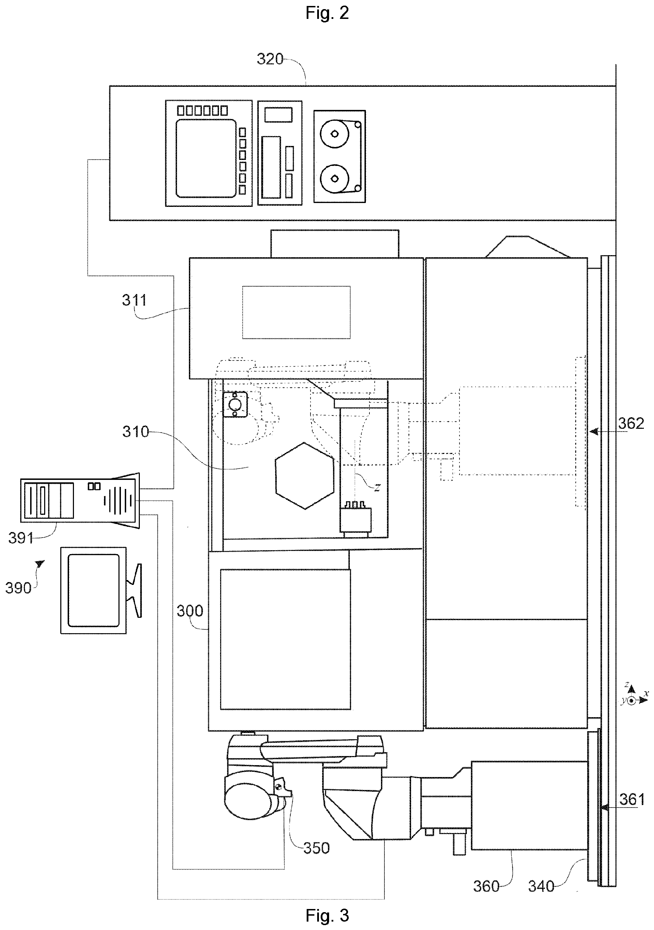

   la figure 3 est une vue d'ensemble d'un système montrant le contexte de mise en œuvre du procédé selon un exemple de mise en œuvre de l'invention ;
**Fig.4**

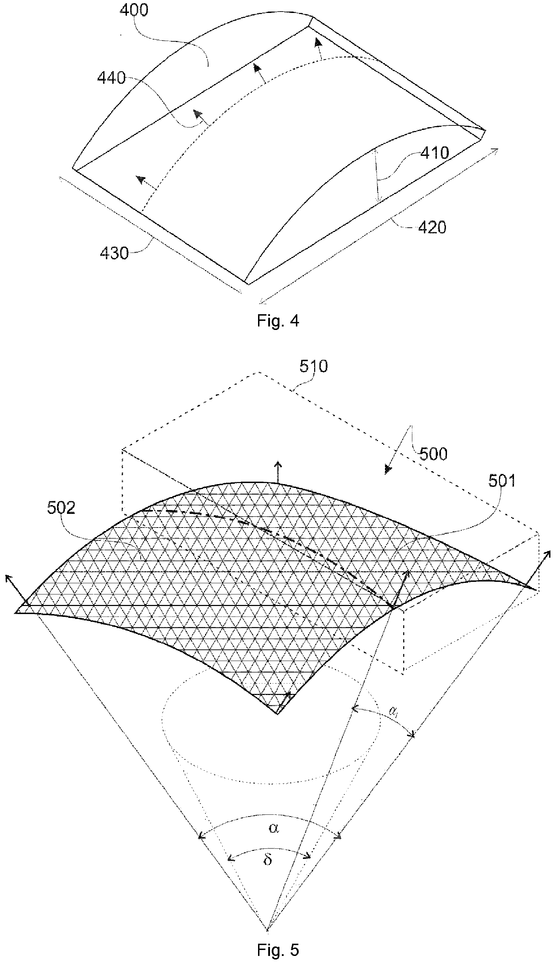

   la figure 4 représente selon une vue en perspective un exemple de volume de mesure d'un capteur mis en œuvre dans le cadre du procédé objet de l'invention ;
**Fig.5**
   la figure 5 illustre, selon une vue en perspective, le principe de segmentation des faces ;
**Fig.6**

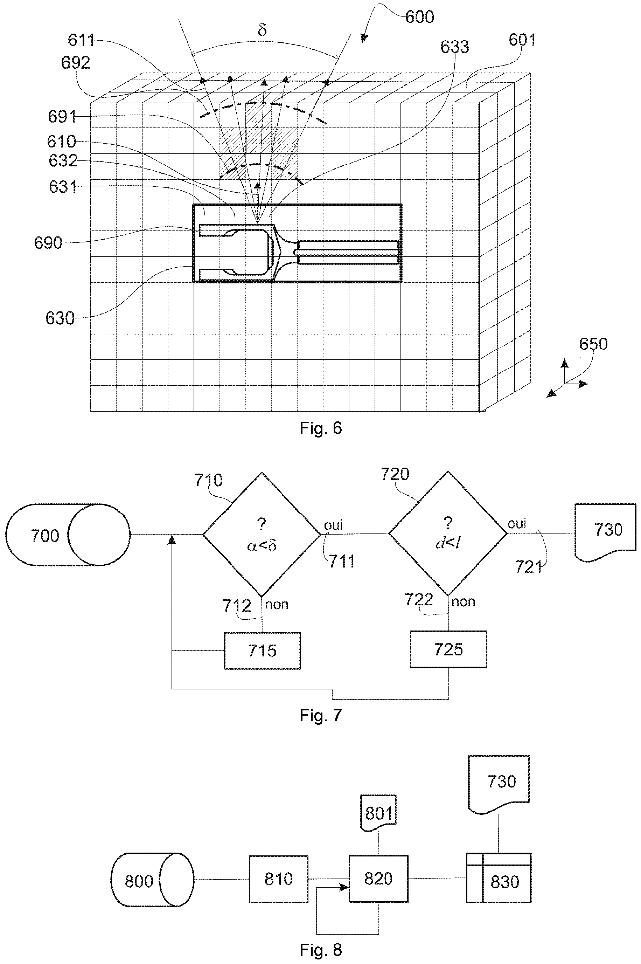

   la figure 6 illustre selon une vue en perspective, le principe de détermination des cartographies de visibilité :
**Fig.7**
   la figure 7 est un exemple d'organigramme de la méthode de segmentation des faces ;
**Fig.8**
   la figure 8 est un exemple d'organigramme de la détermination de la cartographie de visibilité ;
**Fig.9**

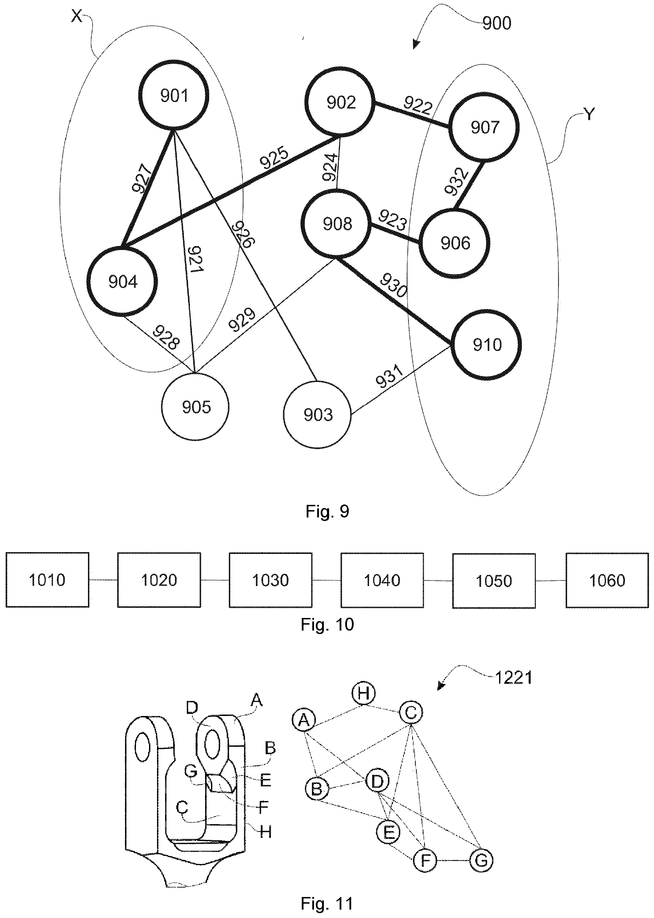

   la figure 9 montre un exemple de graphe de visibilité ;
**Fig.10**
   la figure 10 montre l'organigramme global du procédé objet de l'invention ;
**Fig.11**
   la figure 11 montre un exemple partiel de graphe de connectivité entre les surfaces d'un modèle CAO ;
**Fig.12**

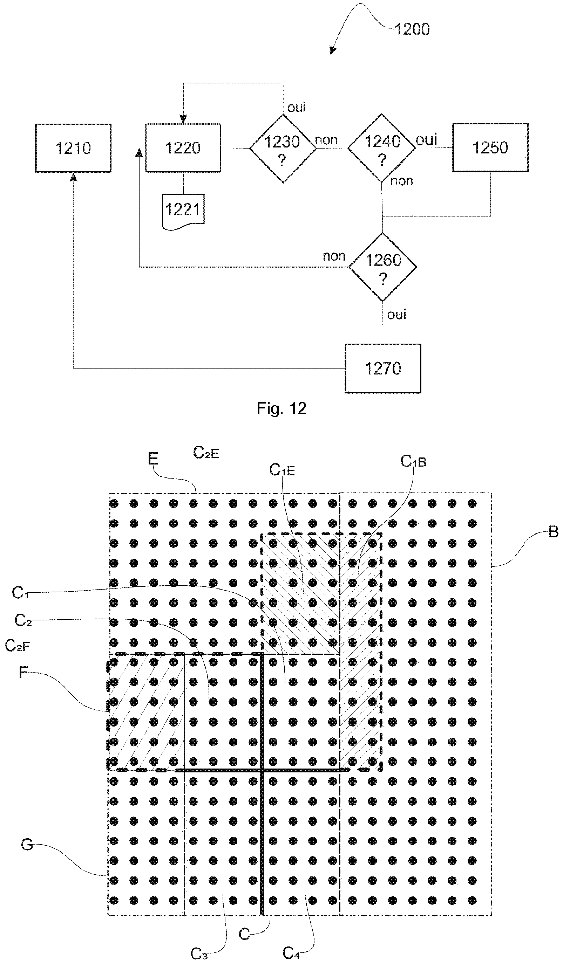

   la figure 12 est un exemple d'organigramme de segmentation du modèle comprenant une exploration des faces adjacentes ;
**Fig.13**
   la figure 13 représente selon un schéma de principe plan, l'étape d'expansion des nœuds vers les faces adjacentes, lors de la segmentation du modèle ;
**Fig.14**

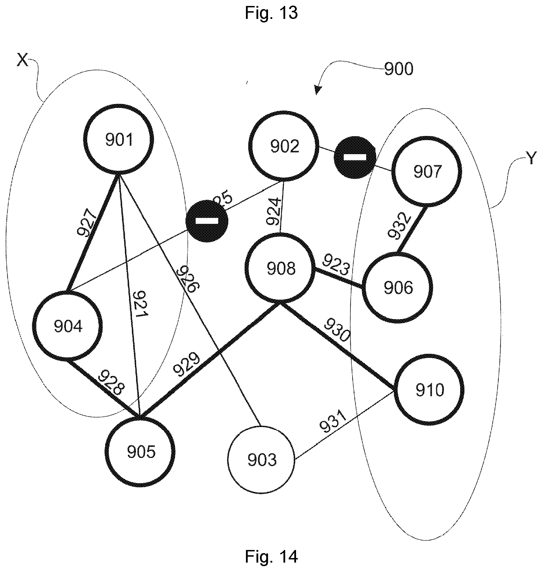

   et la figure 14, illustre un exemple de calcul d'un nouveau graphe de visibilité lorsque des positions relatives de contrôle ne sont pas accessibles.

### Manière(s) de réaliser l'invention

Pour en faciliter l'exposé, la mise en œuvre du procédé objet de l'invention est décrite selon un exemple non limitatif mettant en œuvre une pièce obtenue en tournage-fraisage, dont la mesure est réalisée au moyen d'un capteur optique par projection de lumière structurée, dans l'environnement de la machine de tournage-fraisage.

L'homme du métier comprend que le procédé s'applique à d'autres configurations, notamment lorsque la pièce est produite au moyen d'une cellule de fabrication et où la pièce est déplacée, généralement de manière automatique, sur un montage de fabrication palettisé entre différents postes/machines de fabrication.

Dans ce dernier exemple, non représenté, la pièce reste montée sur sa palette lors du contrôle, lequel est, selon des variantes, réalisé au niveau d'un poste de contrôle spécifique ou dans l'espace de travail d'un des postes/machines de fabrication.

Le principe de fonctionnement du capteur optique, selon un exemple de mise en œuvre, consiste à projeter une séquence de franges sur un objet et à enregistrer, à l'aide d'une caméra généralement intégrée au capteur, les images de ces franges déformées par le relief de l'objet. Le traitement de la séquence d'images fournit, pour chaque pixel de l'image délivrée par la caméra, la distance du point correspondant de la surface sur laquelle sont projetées lesdites franges.

Ainsi, ledit capteur permet d'obtenir, pour une surface analysée, un nuage de points, chaque point étant défini par un vecteur le liant au centre optique du capteur, et ainsi d'en déduire les coordonnées tridimensionnelles de chaque point du nuage dans un repère lié au capteur.

L'invention n'est cependant pas limitée à ce type de pièce et de capteur, et s'applique à toute forme de pièce et à toute technologie de capteur redevables du procédé objet de l'invention.

Dans tout le texte, le terme « acquisition » s'entend de l'acquisition par le capteur et de l'enregistrement d'un nuage de points à la surface de la pièce à contrôler réalisée dans une position relative fixe de la pièce et du capteur.

Dans un centre de tournage-fraisage et selon un exemple de réalisation, la pièce est maintenue dans un mandrin rotatif, lequel mandrin est utilisé pour la mise et le maintien en position de la pièce dans la machine, ainsi que pour entraîner la pièce en rotation et lui communiquer un mouvement de coupe de rotation autour d'un axe *z.*

L'axe z *est* horizontal ou vertical.

Selon un exemple de réalisation courant et non limitatif, une tourelle liée à un chariot, supporte une pluralité d'outils de tournage, interchangeables par la rotation de la tourelle, lequel chariot est apte à se déplacer parallèlement à l'axe z *de* rotation de la pièce, ainsi que selon un axe *x* perpendiculaire à ce dernier, selon des mouvements à commande numérique, à des vitesses et des positions programmées, pour réaliser des opérations de tournage, c'est-à-dire générer par enlèvement de matière des formes présentant une symétrie de rotation par rapport à l'axe *z.*

Certaines machines comportent plusieurs tourelles et plusieurs chariots, lesquels sont également aptes à se déplacer selon un axe *y* perpendiculaire aux axes *z* et *x*

Ce type de machine comprend généralement un chariot axial, apte à se déplacer selon l'axe *z* et à réaliser, par exemple, des opérations de perçage et d'alésage selon l'axe *z* au centre de la pièce, le mouvement de coupe étant communiqué à la pièce.

La machine comprend en outre un chariot supportant une broche motorisée apte à supporter un outil de fraisage, de perçage ou d'alésage, outil auquel le mouvement de coupe est communiqué par ladite broche motorisée.

Le chariot supportant cette broche est apte à se déplacer selon les axes *x*, *y* et *z* de la machine, voire selon un axe de rotation autour de l'axe *x*, selon des mouvements pilotés par commande numérique, à des vitesses et des positions programmées afin de réaliser des opérations de fraisage.

Le pilotage du mandrin est également à commande numérique. Au cours d'une opération de tournage, le mandrin communique à la pièce la vitesse de coupe correspondant à ladite opération, au cours d'une opération de fraisage, le mandrin est déplacé dans une position fixe programmée ou communique à la pièce la vitesse d'avance correspondant à l'opération de fraisage réalisée.

Dans le cadre d'une opération de mesure in-situ, les tourelles, les chariots, le mandrin constituent un environnement machine et des éléments de cet environnement machine susceptible de masquer la vue ou l'accessibilité du capteur de mesure, et avec lesquels le capteur ou son effecteur le supportant sont susceptibles d'entrer en collision.

Figure 1, selon un exemple de réalisation non limitatif d'une pièce illustrant la mise en œuvre le procédé objet de l'invention, la pièce finale (190, étape 1D) est réalisée par enlèvement de matière en partant d'un brut cylindrique (100, étape 1A), par exemple une barre.

Selon un exemple de réalisation la pièce est réalisée en une seule phase, c'est-à-dire sans modification du positionnement de la pièce dans la machine, alternativement elle est réalisée en deux phases, par exemple avec un retournement entre les états correspondant à la , étape 1B et la étape 1C.

Les opérations d'usinage comprennent des opérations de tournage en chariotage pour le passage de l'état de la étape 1A celui de la , étape 1B puis des opérations de fraisage selon plusieurs plans et de perçage-alésage pour la réalisation de la fourchette (130) et de l'alésage (140) de ladite fourchette, , étape 1C, ainsi qu'une opération de rainurage en fraisage, pour la réalisation de la rainure (150) , étape 1D.

Finalement une opération de tronçonnage permet de séparer la pièce (190) de la barre constituant le brut.

Le procédé objet de l'invention est mis en œuvre afin de définir le positionnement relatif du capteur de mesure par rapport à la pièce dans l'environnement machine, dans le but de contrôler la pièce dans des situations de réalisation intermédiaires, entre des opérations d'usinage.

Ainsi, à titre d'exemple non limitatif, une première opération de contrôle consiste à contrôler, dans la configuration de la étape 1B, le positionnement et le diamètre de la partie cylindrique d'ébauche de la fourchette, une deuxième opération de contrôle consiste à contrôler la fourchette (130) et l'alésage (140) au cours ou à l'issue des opérations de fraisage correspondantes.

À titre d'exemple, les contrôles à réaliser au cours de cette deuxième opération de contrôle concernent des contrôles dimensionnels tels que le diamètre de l'alésage (140) ou l'ouverture de la fourchette (130). De tels contrôles sont réalisables sans démontage de la pièce par des techniques de palpage connues de l'art antérieur, toutefois ces techniques de l'art antérieur utilisent les indications délivrées par les codeurs des axes de la machine et sont donc dépendantes de la géométrie de la machine et de la validité des informations délivrées par lesdits codeurs.

Selon d'autres exemples, les contrôles géométriques réalisés concernent également : le parallélisme des faces extérieures (231, 232) ainsi que des faces intérieures (241, 242) de la fourchette, la perpendicularité de l'axe (245) de l'alésage, par rapport aux faces (231, 232, 241, 242) de la fourchette, ainsi que par rapport à l'axe de la partie cylindrique (200) de la pièce, la symétrie des branches de la fourchette par rapport à la partie cylindrique (200) ou encore la coplanéité de l'axe (245) de l'alésage et de l'axe de la partie cylindrique (200).

La personne du métier comprend que si la pièce doit être démontée de la machine et placée dans une machine de mesure tridimensionnelle pour effectuer ces contrôles, il sera impossible de repositionner la pièce dans la machine avec suffisamment de précision pour effectuer les opérations suivantes, ne serait-ce que parce que la pièce doit alors être détachée de la barre constituant le brut. C'est pourquoi le procédé objet de l'invention vise un contrôle dit in-situ c'est-à-dire sans démontage de la pièce de son support d'usinage et en conservant celle-ci dans l'environnement machine.

L'autre avantage d'un contrôle in-situ, est de permettre la correction des opérations de fabrication suivantes de sorte, soit à rattraper une cote hors tolérance ou à éviter qu'une opération suivante se trouve hors tolérance du fait du résultat d'une opération précédente.

Ainsi, l'opération de contrôle, selon un exemple de réalisation, fait partie intégrante de la gamme de fabrication, et permet d'améliorer la précision et de réduire les taux de rebuts, ou à tout le moins de rebuter au plus tôt une pièce non conforme.

Figure 3, à cette fin, le procédé objet de l'invention concerne la mise en œuvre d'un système comprenant une machine-outil (300) à commande numérique, ici un centre de tournage-fraisage. Ladite machine-outil comprend une zone de travail sécurisée (310), correspondant à l'environnement machine et à la zone dans laquelle la pièce est transformée.

L'accès à cette zone sécurisée est protégé par une porte (311) et des moyens de sécurité de sorte que, lorsque ladite porte est ouverte, la machine est dans une configuration de sécurité, à titre d'exemple, n'autorise des mouvements d'axe qu'à vitesse réduite et n'autorise pas les mouvements de coupe.

La machine est pilotée pour ses opérations d'usinage par un directeur de commande numérique (320) programmable.

Le système comprend un effecteur portant un dispositif de mesure (350).

Selon un exemple de réalisation l'effecteur est un robot (360) polyarticulé, anthropomorphique, lequel robot est monté sur un chariot de support (340) permettant de déplacer ledit robot (360) relativement à la machine (300) notamment afin de rapprocher ou d'éloigner le robot de la zone de travail sécurisée (310) de la machine.

Ainsi, lorsque le robot (360) se trouve en position de repli (361), il est possible d'accéder sans gêne à la machine, notamment pour le chargement d'un brut ou le déchargement d'une pièce finie, ou encore pour installer des outils dans la tourelle.

Pour effectuer une opération de contrôle, le robot (360) est déplacé dans une position de contrôle (362) lui permettant d'accéder à la zone de travail

Le robot (360) supporte et permet de déplacer un dispositif de mesure sans contact (350), par exemple un capteur optique par projection de lumière structurée.

Le système comprend un poste de supervision (390) comprenant un ordinateur avec des moyens de mémoire et de calcul, ainsi que des moyens de saisie et d'affichage.

Le poste de supervision est connecté et échange des informations avec le directeur de commande numérique (320) de la machine, avec le robot (360) et son chariot mobile (340) notamment pour déplacer le robot selon ses axes et relativement à la machine, ainsi qu'avec le dispositif de mesure (350) notamment afin de récupérer les coordonnées des points du nuage de points acquis par ce dispositif.

Le procédé objet de l'invention vise à la préparation des opérations de contrôle mises en œuvre au moyen du système décrit ci-avant ou d'un autre système équivalent en termes de fonctionnalités.

Plus précisément, le procédé objet de l'invention vise à fournir pour un couple pièce-capteur déterminé, les positionnements relatifs dudit capteur par rapport à ladite pièce permettant de réaliser l'acquisition de l'ensemble des surfaces à contrôler dans un minimum de positionnements relatifs.

Le résultat du procédé objet de l'invention n'est pas spécifique à un environnement machine donné, il est générique et adaptable à tout environnement machine et effecteur mettant en œuvre ledit couple capteur-pièce.

Dans la mise en œuvre du procédé objet de l'invention, le capteur, quel que soit son type, est caractérisé par des distances d'acquisition maximales et minimales par rapport à la surface objet de l'acquisition, il s'agit de distances que l'on peut qualifier de distances de focalisation.

Les termes « distance de focalisation » font plus particulièrement référence à un capteur optique, mais la personne du métier comprend que même un capteur mécanique (palpeur) comprend une distance minimale et une distance maximale de mesure par rapport à une surface, en fonction de la technologie du capteur. Aussi ces termes doivent être interprétés dans ce sens.

Figure 4, lorsque le capteur est placé à une distance d'une surface à l'intérieur de cette plage de focalisation, le capteur est capable de réaliser une acquisition de la position de tout point de cette surface se trouvant dans un volume (400) de mesure, lequel volume de mesure est défini par la plage de mesure (410) du capteur, qui peut être qualifiée de profondeur de champ. Selon le type de capteur cette plage est d'épaisseur variable sur le volume de mesure ; une aire balayée définie par sa largeur (420) et sa longueur (430) et un angle relatif maximum d'acquisition par rapport à la normale (440) à ladite surface.

La forme du volume (400) de mesure, représentée figure 4, est purement illustrative et dépend de la technologie et des performances du capteur utilisé.

Lorsque tous les points de la surface dont l'acquisition est envisagée se trouvent à l'intérieur de ce volume de mesure (400) l'acquisition du nuage de points correspondant à cette surface est potentiellement réalisable par une seule acquisition, sans déplacement du capteur ou de la pièce portant ladite surface.

Selon un exemple purement illustratif et non limitatif, un capteur optique donné a par exemple une distance de focalisation comprise entre 200 mm et 320 mm, une surface d'acquisition de largeur (420) 200 mm et de longueur (430) 150 mm, une plage de mesure (410) de 120 mm et un angle de mesure possible dans un cône de demi-angle 45° par rapport à la direction de l'axe du capteur.

Ainsi, selon une première condition, pour que deux points quelconques, *a* et *b*, de la pièce puissent être acquis lors d'une même acquisition par le capteur, ces deux points doivent se trouver tous les deux dans le volume (400) de mesure du capteur.

Selon une deuxième condition, aucun des deux points ne doit être masqué optiquement par une autre surface de la pièce.

Par exemple en revenant à la figure 2, il n'est pas possible de réaliser au cours de la même acquisition, l'acquisition des deux surfaces extérieures (231, 232) de la fourchette, celles-ci se masquant mutuellement.

Selon une troisième condition, aucun des deux points ne doit être masqué optiquement par un obstacle de l'environnement au moment de la mesure. Cette condition est spécifique de l'environnement machine.

Si l'une de ces conditions n'est pas vérifiée, les deux points ne peuvent pas être acquis lors d'une même acquisition au moyen du capteur et il y a alors deux possibilités pour réaliser une mesure faisant intervenir ces deux points.

Selon une première possibilité, il existe une autre position relative du capteur par rapport à la pièce dans laquelle les trois conditions sont réunies vis-à-vis de *a* et de *b.*

Si cette première possibilité n'est pas réalisable, alors une mesure faisant intervenir ces deux points *a* et *b* doit faire l'objet d'au minimum deux acquisitions distinctes.

Ces deux acquisitions sont alors réalisées selon des positionnements relatifs différents du capteur par rapport à la pièce.

Un positionnement relatif du capteur par rapport à la pièce s'entend d'un déplacement du centre optique du capteur par rapport à la pièce ou d'une orientation différente du capteur par rapport à son centre optique, le « ou » étant inclusif.

Dans ce dernier cas, pour que la mesure soit possible, il doit exister au moins un troisième point *c* intermédiaire, tel que les 3 conditions énoncées ci-dessus soient vérifiées vis-à-vis de *a* et *c* et de *b* et *c.*

Selon ce principe, il est aisé de comprendre qu'il est possible de réaliser une mesure entre deux points ou deux groupes de points éloignés sur la base de plusieurs acquisitions distinctes, dès lors qu'il existe toujours au moins un point intermédiaire, tel que le point *c*, entre deux acquisitions, de sorte que les acquisitions puissent être recalées les unes par rapport aux autres.

Le positionnement relatif du capteur par rapport à la pièce lors de chaque acquisition est obtenu par le déplacement du capteur au moyen d'un effecteur (360, figure 3), ou par le déplacement de la pièce.

Dans un environnement défini, la proportion de la surface de l'objet à contrôler qui est visible depuis le capteur, compte tenu des caractéristiques de ce dernier, est également fonction de la position relative du capteur par rapport à la pièce.

Cette position relative est fonction des positionnements respectifs de la pièce et du capteur dans cet espace et de leurs orientations respectives.

Dans un environnement défini, il faut de plus vérifier que ces positions relatives d'acquisition sont atteignables, c'est-à-dire qu'il n'y a pas d'obstacle interdisant une des positions relatives, que la position définie soit dans l'espace de positionnement atteignable par l'effecteur et qu'il existe une trajectoire hors collision entre deux positions relatives d'acquisition.

Ces contraintes ainsi que la troisième condition évoquée plus haut sont spécifiques d'un environnement machine donné, de l'effecteur spécifique supportant le capteur et du capteur.

La personne du métier comprend que face à une situation de mesure face(s)/capteur donnée il existe une infinité de possibilités pour réaliser une mesure.

Si le nombre de mesure est trop faible ou mal organisé, il y a un risque que les mesures ne se recouvrent pas correctement pour réaliser leur recalage relatif et donc conduire à un contrôle non fiable. Si le nombre d'acquisition est trop élevé, le temps de mesure croît rapidement sans apporter de gain en matière de précision.

Le procédé objet de l'invention vise ainsi à définir, de manière automatique, une cartographie de l'espace en fonction de la visibilité qu'il offre d'une pièce donnée par rapport à un capteur de mesure de caractéristiques données, et de déterminer les positions relatives de la pièce et du capteur, permettant l'acquisition de toutes les surfaces de la pièce par un minimum d'acquisitions.

La cartographie et les positions d'acquisitions obtenues sont spécifiques à la pièce et au capteur et indépendantes de l'environnement machine.

Elles sont ensuite utilisables dans n'importe quel environnement machine, en introduisant les spécificités de cet environnement dans cet espace cartographié.

En reprenant l'exemple des points *a* et *b* ci-dessus, il est aisé de comprendre que l'incertitude de mesure, par exemple d'une mesure de la distance entre *a* et *b*, sera d'autant plus faible que cette mesure sera réalisée sur la base d'un nombre minimum d'acquisitions.

Il est également évident que le contrôle d'une pièce sera d'autant plus rapide que le nombre d'acquisitions pour réaliser ce contrôle est réduit.

Ainsi, le procédé objet de l'invention permet à la fois d'améliorer la productivité de l'opération de contrôle *in situ* et d'en améliorer la précision.

Le procédé objet de l'invention comprend ainsi une pluralité d'étapes visant à déterminer ladite cartographie afin de mettre en œuvre l'opération de contrôle visée. Ces étapes sont mises en œuvre par l'ordinateur et comprennent en entrée le modèle CAO de la pièce à contrôler et les caractéristiques du capteur, à savoir ; ses distances minimales et maximales de focalisation, son volume de mesure et ses angles limites de mesure.

L'objectif étant de réaliser un contrôle in-situ de la pièce en cours de fabrication, le modèle CAO considéré est celui correspondant à l'état de la pièce au stade de fabrication auquel elle se trouve lors de l'opération de mesure envisagée. Selon des exemples de mise en œuvre ce modèle CAO est obtenu à partir d'un logiciel de CFAO (Conception et Fabrication Assistées par Ordinateur) ou est construit spécifiquement pour refléter l'état de la pièce au stade de fabrication correspondant à la réalisation du contrôle.

Le modèle CAO comprend une pluralité de faces.

Une face est une entité géométrique faisant l'objet d'un contrôle.

Ainsi, en revenant à la figure 2, ledit contrôle porte, par exemple, sur une face unique, par exemple la cylindricité de la queue cylindrique (200) de la pièce, ou sur plusieurs faces, par exemple sur le parallélisme des faces extérieures (231, 232) de la fourchette.

Selon ces deux exemples, aucun de ces deux contrôles n'est réalisable par une acquisition unique. Ainsi, l'acquisition de la forme de la queue cylindrique (200) ne peut être réalisée en une seule acquisition, les angles limites d'acquisition du capteur s'étendant au mieux sur 180°.

Le même problème se pose pour le contrôle mettant en œuvre les deux faces externes (231, 232) de la fourchette, même dans l'hypothèse où chacune de ces faces, prise individuellement, peut être acquise en une seule acquisition.

Dans les deux exemples précédents il faudra recourir à une pluralité d'acquisitions, les surfaces couvertes par chacune de ces acquisitions présentant, au moins deux à deux, un recouvrement suffisant pour permettre leur recalage relatif.

Dans l'exemple des deux faces planes extérieures (231, 232) de la fourchette, les deux faces n'ont aucune surface ou portion de surface en commun. Aussi, pour réaliser une mesure entre ces deux faces il sera nécessaire de faire l'acquisition d'au moins une portion d'au moins une autre face (237), s'étendant entre les deux faces en question de sorte à pouvoir recaler les mesures les unes par rapport aux autres.

Figure 10, à cette fin, la méthode objet de l'invention comprend essentiellement 3 étapes dites de cartographie comprenant :
- une segmentation (1010) du modèle CAO en un ensemble de surfaces, ou nœuds, chaque nœud correspondant à une surface visible en une seule acquisition en fonction des caractéristiques du capteur ;
- la détermination (1020) de la visibilité de chaque nœud depuis chaque position relative du capteur par rapport audit nœud ;
- la détermination des visibilités communes (1030), ou arêtes, entre les nœuds, deux nœuds étant liés par une arête lorsqu'une acquisition permet de couvrir simultanément une partie au moins de la surface de chacun des deux nœuds.

Figure 9, la réalisation de ces trois étapes de cartographie permet d'obtenir un graphe de visibilité (900).

Ledit graphe de visibilité permet au cours d'une étape d'optimisation (1040) de déterminer pour une face, un ensemble de faces ou plus généralement l'ensemble de la pièce, une séquence d'acquisition permettant de couvrir en un minimum d'acquisitions, présentant les recouvrements appropriés, l'ensemble des faces de la pièce faisant l'objet d'un contrôle.

L'optimisation consiste à déterminer à partir du graphe de visibilité le chemin le plus court empruntant les arêtes du graphe et passant une seule fois par chacun des nœuds définissant les faces objets du contrôle.

Ce problème est un problème NP-complet qui est résolu par la mise en œuvre d'une heuristique et d'un algorithme.

En revenant à la figure 10, au cours d'une étape d'implémentation (1050), les positions correspondant à la séquence d'acquisition sont traduites en positions relatives de la pièce et du capteur et en trajectoires relatives de positionnement de l'effecteur portant le capteur et des axes de la machine.

Finalement, au cours d'une étape de contrôle (1060) le programme de déplacement et d'acquisition ainsi déterminé et mis en œuvre par le robot et la machine, par l'intermédiaire de leurs directeurs de commande, suivant les instructions reçues du poste de supervision pour réaliser les opérations d'acquisition nécessaires au contrôle.

### Segmentation du modèle CAO

Selon un exemple de réalisation, la segmentation du modèle CAO comporte une première étape consistant à échantillonner le modèle sous la forme d'un nuage de points.

En effet, les surfaces du modèle CAO sont généralement définies mathématiquement sous la forme d'entités géométriques (cylindres, plans, sphère ...) ou encore sous forme de NURBS (*Non-Uniform Rational B-Spline*). Les opérations décrites ci-après consistent essentiellement à classer des portions de ces surfaces dans des ensembles et à établir les relations entre ces ensembles.

Selon un exemple de réalisation avantageux, ces opérations sont ainsi réalisées sur des ensembles de points issus de cet échantillonnage.

Le modèle étant scindé en faces, c'est-à-dire des entités surfaciques séparées par des arêtes, une opération de contrôle porte sur une ou plusieurs faces

Ainsi, une première opération consiste en une tessalation du modèle CAO de la pièce, c'est-à-dire que les surfaces sont maillées par des pavés polygones plans élémentaires jointifs, par exemple des mailles triangulaires, de dimensions adaptées selon une tolérance de flèche par rapport à la surface réelle. Cette opération est un traitement connu de l'art antérieur est n'est pas exposée plus avant.

À l'issue de l'opération de tessalation, dans le cas d'un maillage triangulaire, chaque maille comprend 3 points, chacun de ces points est commun à 3 mailles, et chaque maille comporte une normale à sa surface.

Ainsi, à chaque point est associée une direction normale moyenne correspondant à la combinaison vectorielle des 3 normales de ses mailles communes.

L'opération de tessalation livre ainsi un ensemble de mailles qui est traduit en une liste de points, chacun des points étant associé à des coordonnées spatiales et une direction normale dans un repère lié à la pièce.

Selon un mode de réalisation avantageux, la surface maillée est échantillonnée en un nombre de points réduits selon une densité surfacique de points prédéfinie.

Quelque soit le mode de réalisation, chaque point du nuage correspondant au modèle est associé à une face.

Les nuages de points correspondant à chaque face du modèle sont scindés en sous-ensembles chaque sous-ensemble comprenant des points de la face dont l'acquisition est possible au cours d'une seule acquisition. Un tel sous-ensemble constitue un nœud.

Figure 5, en partant d'une surface quelconque (500), pour que l'ensemble des points échantillonnés sur cette surface puissent être acquis en une seule acquisition, l'écart de normales α maximum entre les points de cette surface doit être compris dans le cône d'angle δ de mesure du capteur.

Si tel n'est pas le cas, comme sur cette figure, la surface, en réalité le nuage de points est scindé en 2, fournissant ainsi 2 nuages de points (501, 502). Ces deux nuages de points sont jointifs mais sans recouvrement.

Selon cet exemple, la condition d'écart maximum de normale est vérifiée sur chacun des 2 nuages de points (501, 502), par exemple, l'écart α₁ sur le nuage 501 étant inférieur à d alors l'ensemble des points de ce nuage (501) peuvent être acquis en une seule acquisition, sous réserve qu'ils entrent dans le volume de mesure du capteur (510).

Si l'encombrement spatial du nuage de points (501) entre dans le volume de mesure (510) du capteur, comme c'est le cas sur cette figure, alors l'ensemble des points du nuage (501) constitue un nœud dont l'acquisition par le capteur est réalisable en une seule acquisition.

Si l'encombrement spatial du nuage de points (501) est supérieur au volume de mesure (510) du capteur, alors ledit nuage (501) est scindé en 2 et chacun des sous-ensembles de points résultant de cette scission est examiné vis-à-vis du volume de mesure (510) du capteur.

Selon un exemple de réalisation les scissions du nuage de points (500) sont réalisées en mettant en œuvre un algorithme de regroupement ou « *clustering* » de type *Kmeans.* Cet algorithme regroupe les points du nuage en deux clusters (501, 502), soit *K=2,* sur la base de la minimisation d'une distance par rapport à un centroïde. Les distances considérées, sont par exemple, pour la condition d'écart angulaire, l'écart angulaire de chaque point par rapport aux centroïdes et pour la condition d'encombrement, la distance euclidienne par rapport aux centroïdes.

L'algorithme de regroupement de type *Kmeans* est connu de l'art antérieur et n'est pas exposé plus avant.

Ces opérations sont répétées sur toutes les faces du modèle jusqu'à ce que celles-ci soient toutes segmentées en une pluralité de nœuds, jointifs, mais sans recouvrement. Chaque nœud est ainsi un ensemble de points dont la distribution spatiale et les orientations des normales, permettent leur acquisition en une seule acquisition par le capteur de mesure.

Figure 7, à cette fin, chaque face est analysée selon le schéma récursif illustré ci-avant.

En partant du nuage de points (700) associé à la face et déterminé lors l'opération d'échantillonnage précédente, selon un premier test (710) la distance angulaire α entre les normales des points du nuage est vérifiée. Si cette distance est supérieure (712) à une tolérance angulaire (δ) donnée, correspondant à la limite angulaire de mesure du capteur, le nuage de point est scindé en 2, au cours d'une opération de scission (715) relative à la distance angulaire, résultant en 2 sous-ensembles.

Le processus est répété sur chacun des sous-ensembles ainsi obtenus, jusqu'à ce que la face soit ainsi scindée en plusieurs sous-ensembles chacun de ceux-ci entrant dans la tolérance angulaire de mesure du capteur.

Par exemple, si la plage angulaire de mesure du capteur est de +/- 45°, alors la face cylindrique (200, figure 2) est scindée en 4 sous-ensembles. En revanche sur une face plane (232, figure 2) le sous-ensemble, à ce stade, est constitué par l'ensemble de la face.

Lorsque tous les points du sous-ensemble considéré sont compris dans la tolérance angulaire (711), le sous-ensemble correspondant est analysé selon un test (720) relatif au volume de mesure du capteur.

Selon un exemple de réalisation, le nuage de points est représenté par une boîte englobante et le test (720) porte sur la distance entre les sommets de la boîte.

Cette distance *d* entre les sommets de la boîte englobant le nuage de points est comparée à une distance admissible *l*, entre les sommets de la boîte (610, figure 6) correspondant au volume de mesure du capteur.

Si (722) *d* est supérieur à *l*, alors le sous-ensemble considéré occupe un volume supérieur au volume du capteur. Il est scindé au cours d'une opération de scission (725) relative au volume de mesure.

Le processus est répété sur les 2 sous-ensembles résultants et ceci jusqu'à ce que tous les points de chaque sous-ensemble se trouvent dans un volume compatible avec le volume de mesure du capteur. Les points dudit sous-ensemble étant également distants entre eux d'une distance angulaire compatible avec les caractéristiques du capteur, l'acquisition de ce sous-ensemble est réalisable en une seule acquisition.

Ainsi, lorsque cette condition sur le volume de mesure est vérifiée (721) pour un sous-ensemble, ledit sous-ensemble constitue un nœud.

Le processus est répété jusqu'à ce que tous les points du nuage de point correspondant à la face soient attribués à un nœud.

La mise en œuvre de ce principe par dichotomie est rapide et permet de définir des nœuds distincts les uns des autres.

À ce stade, chaque point du nuage résultant de l'échantillonnage appartient à un nœud, chaque nœud appartient à une face, et on obtient un fichier (730) associant chaque point à un nœud et à une face.

Ainsi, selon cette méthode, chaque nœud couvre au plus une face et une face est couverte par au moins un nœud.

Le volume spatial occupé par chaque nœud est au plus égal au volume de mesure du capteur mais peut être inférieur à ce volume.

L'écart angulaire entre les normales aux points compris dans le nœud est au plus égal à la capacité angulaire de mesure du capteur.

### Expansion des nœuds

Le schéma récursif exposé ci-avant est applicable face par face à l'ensemble du nuage de points correspondant au modèle. Dans ce cas, à l'issue de l'opération de segmentation, chaque point appartient à un nœud, chaque nœud appartient à une face et les points compris dans un nœud s'inscrivent dans le volume de d'acquisition et le cône de mesure du capteur.

Cependant, figure 12, selon un mode de réalisation avantageux permettant de réduire le nombre de nœuds, la construction des nœuds comprend une étape (1220) d'expansion des nœuds aux faces voisines.

Ainsi, en partant d'une première face, ladite face est segmentée (1210) en nœuds selon le principe exposé aux étapes de la figure 7.

Au cours d'une étape d'exploration (1220) les points appartenant à des faces adjacentes à cette première face sont explorés.

Les faces adjacentes à la première face sont définies par un graphe de connectivité (1221).

La figure 11 donne un exemple partiel d'un tel graphe de connectivité entre les faces (A, B, C, D, E, F, G, H) d'un modèle.

Deux faces sont connectées, et adjacentes lorsqu'elles comportent une arête commune.

Ainsi selon cet exemple partiel, la face C est connectée aux faces E, F, G et B.

Figure 13, selon le principe, dans un exemple où la première face à être segmentée est la face C, comme suite à cette étape de segmentation, les faces adjacentes, E, F, G et B sont explorées.

La figure 13 est un schéma de principe illustratif de la méthode appliquée à un nœud de la face dans une représentation plane pour en faciliter la lecture.

Selon un exemple, la face C est initialement couverte par 4 nœuds (C₁, C₂ , C₃, C₄).

Au cours de l'exploration des faces voisines, selon cet exemple simplifié, le nœud C₁ peut potentiellement être étendu vers la face E, et la face B, le nœud C₂ vers la face E et la face F, le nœud C₃ vers la face G et le nœud C₄ vers la face B.

Selon cet exemple, seule une partie des points de la face B (C₁B) et de la face E (C₁E) sont susceptibles d'entrer dans le volume de mesure du capteur en même temps que les points du nœud C₁.

Il en est de même pour les points de la face E vis-à-vis du nœud C₂, seule une partie des points (C₂E) de cette face sont susceptibles d'entrer dans le volume de mesure du capteur en même temps que les points du nœud C₂.

En revanche, selon cet exemple, l'intégralité des points de la face F (C₂F) est susceptible d'entrer dans le volume de mesure du capteur et l'acquisition de ces points C₂F est réalisable en une seule acquisition en même temps que les points correspondant au nœud C₂.

Ainsi le nœud C₂ est étendu à la face F et concerne ainsi l'ensemble de points C₂ U C₂F, de sorte que la face F, intégrée au nœud C₂ ne fait pas l'objet d'une segmentation ultérieure.

En revanche selon cet exemple de réalisation, les faces E et B qui ne peuvent être que partiellement couvertes au cours d'une acquisition d'un nœud de la face C font l'objet d'une segmentation spécifique.

Ainsi, à l'issue de l'opération de segmentation selon ce mode de réalisation, chaque point du nuage de point correspondant au modèle appartient à un nœud unique, chaque nœud s'étend sur une ou plusieurs faces et chaque point d'un même nœud s'inscrit dans le volume d'acquisition et le cône d'acquisition du capteur.

En revenant à la figure 12, une première face étant segmentée au cours d'une étape de segmentation (1210), au cours d'une étape d'exploration (1220) les points appartenant aux faces adjacentes sont explorés.

Si (1230) le nuage de points appartenant à une face voisine ainsi explorée appartient déjà à un nœud la face n'est pas prise en compte et l'exploration continue sur une autre face adjacente. Si la face n'est pas déjà attribuée à un nœud, alors, si (1240) la surface couverte par le nœud avec l'ajout du nuage de point correspondant à cette face s'inscrit dans le volume d'acquisition et dans le cône de mesure du capteur, alors le nuage de points correspondant à la face est ajouté au nœud dans une étape (1250) d'expansion du nœud.

Si (1260) toutes les faces voisines du nœud ont été traitées, alors, une nouvelle face parmi celles qui ont été ajoutées au nœud est prise en considération (1270) et le processus est repris avec cette nouvelle face.

Le processus est répété jusqu'à ce qu'il ne soit plus possible d'ajouter de nuages de points correspondant à une face entière au nœud courant.

Ce processus global (1200) est repris en autant d'itérations que nécessaires jusqu'à ce que tous les points du nuage correspondant au modèle de la pièce aient été attribués à des nœuds.

Ainsi, à l'issue de l'étape de segmentation, quel que soit son mode de réalisation, avec ou sans exploration des faces adjacentes, chaque point du nuage correspondant au modèle est attribué à un nœud unique, définissant un ensemble *V* des nœuds du modèle.

### Détermination de la visibilité des nœuds

Figure 6, selon un exemple de mise en œuvre, le modèle échantillonné (690) c'est-à-dire le nuage de points correspondant à la pièce, ou aux faces faisant l'objet du contrôle, est placé au centre d'un espace voxelisé (600).

Un espace voxelisé se dit d'un espace discrétisé en une pluralité de voxels (601), ou éléments volumiques élémentaires. Chaque voxel (601) est défini par son volume élémentaire, en l'occurrence la longueur d'arête du cube correspondant à cet élément, et la position de son centre dans un repère (650) lié à l'espace voxelisé.

L'espace voxelisé comprend une boîte englobante (630) comprenant le modèle de la pièce (690). Le reste de l'espace (600) s'étend autour de cette boîte selon des distances fonctions des distances de mesure ou distances de focalisation du capteur.

À titre d'exemple, dans chaque direction du repère (650), les limites extérieures de l'étape voxelisé se situent à une distance de focalisation maximale du capteur depuis la limite de la boîte englobante (630) du modèle (690).

Lorsque le capteur comprend une distance minimale de focalisation, seuls les voxels situés à une distance supérieure à cette distance minimale sont considérés.

D'une manière générale, l'espace voxelisé (600) prend toute forme sur la base des distances minimales et maximales de focalisation du capteur par rapport à la boîte englobante de la pièce.

Dans la boîte englobante (630), certains voxels (631, 632, 633) sont traversés par un nœud, c'est-à-dire que des points appartenant à ce nœud, sont compris dans lesdits voxels compte tenu de leur localisation spatiale.

Ainsi selon cet exemple, chacun de ces voxels (631, 632, 633) comprend une certaine proportion (nombre de points) du nœud.

Depuis chaque voxel (631, 632, 633) une pluralité de rayons (611) est tirée selon des directions correspondant au cône de tolérance angulaire du capteur et centré sur la normale (610) moyenne des points du nœud compris dans la voxel.

Chaque fois qu'un de ces rayons (611) intersecte un voxel de l'espace en dehors de la boîte englobante (630), et que ledit voxel se situe entre les distances minimales (691) et maximales (692) de focalisation du capteur, la portion du nœud située dans le voxel (631, 632, 633) dont est issu le rayon (611) est visible depuis chaque voxel (hachuré sur la figure) traversé par ledit rayon.

L'opération est répétée pour chaque voxel occupé du modèle.

À l'issue de ce processus, il est obtenu une carte de visibilité (930) de l'ensemble de l'espace, c'est-à-dire pour chaque voxel de l'espace (600), les voxels occupés, donc les nœuds, qui sont visibles depuis ce voxel.

Ainsi, figure 8, selon un exemple de réalisation, en partant de la grille de voxels (800), selon une première étape (810) de classement, les voxels de la grille sont triés en voxels comprenant un nœud et le cas échéant le pourcentage du nœud compris dans ce voxel. Ainsi, un lien entre l'ensemble des nœuds et l'ensemble des voxels de la grille est établi.

Au cours d'une étape (820) de projection, pour chaque voxel occupé, un ensemble de rayons est calculé selon un cône dont l'angle au sommet est égal à l'angle de visibilité (δ) du capteur, défini dans un fichier (801) de caractéristiques du capteur, et ayant pour axe, la normale de la surface du nœud occupant ledit voxel.

. Le processus est répété pour chaque nœud de l'ensemble *V* des nœuds du modèle.

Ainsi, il est établi une liste classée (830) attribuant à chaque point du nuage, des coordonnées, une appartenance à une face, une appartenance à un nœud, et une liste de voxels de l'espace voxelisé (800) depuis lequel le point est visible avec les coordonnées de ces voxels.

Ce résultat (830) permet de déterminer, par exemple depuis quel voxel ou position relative du capteur par rapport à la pièce, un point, un nœud, une face sont visibles, ou inversement depuis un voxel donné, quels sont les points, les nœuds ou portions de nœuds, face ou portions de face qui sont visibles depuis cette position relative du capteur par rapport à la pièce.

### Établissement du graphe de visibilité.

Le graphe de visibilité établit, à l'intérieur de la liste correspondant au résultat de l'étape précédente, les relations entre les nœuds selon leur visibilité depuis l'espace voxelisé.

Figure 9, le graphe de visibilité (900) comprend des nœuds (901,..., 910) et des arêtes (921,...,930). Chaque nœud correspond à un ensemble de points issu de l'opération de segmentation du nuage de points, et cet ensemble de points couvre une surface dont l'acquisition est potentiellement réalisable au moyen du capteur de mesure sélectionné en une seule acquisition.

Une arête (921,..., 932) existe entre deux nœuds s'il existe dans l'espace voxelisé un voxel depuis lequel une proportion donnée de chacun de ces nœuds est visible en une seule acquisition avec le capteur dans la position relative par rapport à la pièce correspondant audit voxel.

À titre d'exemple cette proportion est prise égale à 80 % sans que cet exemple ne soit limitatif.

Ainsi entre deux nœuds (901, 902) séparés par une arête (921) il existe une position relative du capteur depuis laquelle au moins 80 % de chaque nœud (901, 902) est visible.

Ainsi, pour chaque ensemble de points, dit de départ, ayant en commun un nœud et un voxel de visibilité, et comprenant au moins 80 % des éléments du nœud, on recherche parmi les autres ensembles de points ayant le même voxel de visibilité ceux qui comprennent au moins 80 % des éléments d'un autre nœud, et si un tel ensemble est trouvé, on établit une arête entre le nœud de départ cet autre nœud, ceci jusqu'à ce que tous les voxels de l'espace voxelisé, dont la visibilité couvre au moins 80 % des éléments d'un nœud, aient été considérés.

À l'issue de cette opération deux nœuds sont liés entre eux par une arête lorsqu'il existe au moins un voxel de l'espace voxelisé, depuis lequel au moins 80 % de la surface de chacun des nœuds est visible.

Cette opération de classement fourni par conséquent une liste d'arêtes avec pour chaque arête les nœuds entre lesquels elle s'entend et les voxels de l'espace voxelisé duquel cette visibilité est obtenue.

D'un nœud peuvent partir ou aboutir plusieurs arêtes.

### Optimisation.

Pour réaliser un contrôle faisant intervenir une face ou une pluralité de face de la pièce il est nécessaire de couvrir tous les nœuds correspondant à ces faces, et le cas échéant des nœuds appartenant à d'autres faces qui permettent le recouvrement et le recalage des acquisitions les unes par rapport aux autres.

Les faces à contrôler, sont définies par l'utilisateur, par exemple en pointant sur lesdites faces par l'intermédiaire d'une interface graphique représentant l'image de la pièce à son état d'avancement dans la gamme de fabrication.

À partir du fichier obtenu à l'issue de la segmentation, les nœuds correspondant à chaque face sont connus et définissent l'ensemble *V* comprenant tous les nœuds du modèle.

De même, le graphe de visibilité *GV* déterminé précédemment donne les relations entre tous les nœuds du modèle en termes de visibilité commune.

Le contrôle, compte tenu de la ou des faces sur lequel il porte, concerne un ensemble *S* de nœuds inclus dans l'ensemble *V*.

L'optimisation de la séquence d'acquisition consiste à extraire du graphe de visibilité *GV* un sous-graphe *GVbis* couvrant tous les nœuds de *S* et dans lequel la somme des arêtes à parcourir, ou chemin, pour couvrir ces nœuds est minimisée.

### Détermination de GVbis

À titre d'exemple illustratif, figure 9, le contrôle porte sur deux faces, la face X comprend les nœuds 901 et 904, et la face Y les nœuds 906, 910 et 907. L'exemple porte ici sur un contrôle concernant deux faces, l'homme du métier comprend que les mêmes principes s'appliquent à un contrôle ne faisant intervenir qu'une seule face ou plus de deux faces.

Selon une première étape, en partant d'un des nœuds appartenant à une face à contrôler, les chemins les plus courts entre ce nœud et chacun des nœuds à contrôler sont recherchés.

Ainsi, en partant du nœud 904 le chemin le plus court pour aller au nœud 901 est l'arête 927. Le chemin le plus court pour aller au nœud 907 passe par les arêtes 925 et 922, etc.

Sur le graphe de la figure 9, cette recherche est triviale mais en pratique le graphe de visibilité est plus complexe et comporte beaucoup plus de nœuds, aussi cette recherche du chemin le plus court est réalisée par un algorithme approprié, par exemple au moyen de l'algorithme de Dijsktra.

Cet algorithme est connu de l'art antérieur et n'est pas exposé plus avant. Une description de cet algorithme est donnée dans : « E.W. DIJKSTRA, A note on two problems in connexion with graphs, Numerische Mathematik 1, pp 269 - 271 (1959*)* »

Pour la mise en œuvre de cet algorithme la longueur de chaque arête est la même et prise égale à 1.

Le nœud (904) étant traité, la longueur des chemins de ce nœud vers les autres est mise à jour et il n'est plus considéré dans la suite de l'analyse.

La même analyse est alors conduite depuis le nœud le plus proche de ce premier nœud, en l'occurrence le nœud 901 selon cet exemple.

Ainsi, le trajet le plus court du nœud 901 vers le nœud 907 emprunte les arêtes 921, 929, 924 et 922 ou 921, 929, 923 et 932, dans la mesure où le nœud 904 n'est plus pris en compte dans l'analyse.

En l'occurrence ces chemins (4 arêtes) sont plus longs que l'addition des chemins entre le nœud 904 et le nœud 901 (1 arête) et du trajet entre le nœud 904 et le nœud 907 (2 arêtes), cette dernière solution est donc retenue entre le nœud 901 et le nœud 907. Dans le cas contraire, la première solution aurait été retenue.

L'analyse est poursuivie selon le même principe depuis le nœud 901 vers les nœuds 906 et 910. Les chemins sont mis à jour, le nœud 901 n'est plus considéré et l'analyse est poursuivie à partir du nœud le plus proche du nœud 901, soit le nœud 910 et ainsi de suite jusqu'à ce que tous les nœuds de toutes les faces à contrôler aient été traités.

À partir de là il suffit de recréer le chemin le plus court en prenant les chemins les plus courts depuis chacun des nœuds, le graphe *GVbis* est obtenu, montré en gras sur la figure 9.

### Implémentation

D'un point de vue pratique, chaque arête de *GVbis* correspond à une acquisition réalisée depuis au moins un point de l'espace, c'est-à-dire un voxel dans l'espace voxelisé, selon une orientation donnée du capteur de mesure.

Chaque arête représente ainsi au moins une position relative du capteur de mesure par rapport à la pièce, et cette position peut être atteinte par la combinaison d'une position/orientation du capteur dans l'espace machine associée à une position/orientation de la pièce dans ce même espace.

Ainsi, le nombre d'arêtes du graphe *GVbis,* correspond à une optimisation du nombre d'acquisitions à réaliser pour couvrir la ou les surfaces objets du contrôle, tout en assurant un recouvrement entre les acquisitions. Ce résultat ne dépend que de la pièce et des caractéristiques du capteur et est indépendant de la machine.

Figure 10, au cours de l'étape d'implémentation (1050) ces positions relatives sont traduites en positions des axes du robot et des axes de la machine, en introduisant les cinématiques du robot et de la machine, l'environnement de la machine et le positionnement de la pièce dans cet environnement.

Cette étape relève de la programmation assistée du robot et de la machine selon des méthodes connues de l'art antérieur, qui, outre les positionnements relatifs permettent de générer trajectoires hors collision tant du robot que des axes de la machine entre les différentes positions relatives.

Ce programme étant établi, l'opération de mesure est réalisée par les acquisitions successives correspondant à ce programme.

Il faut préciser que ces acquisitions résultent dans l'acquisition d'un volume de mesure correspondant à celui du capteur de mesure, lequel volume de mesure est supérieur ou égal au volume des nœuds considérés pour la détermination des positions optimisées d'acquisition.

La détermination des nœuds et la segmentation du modèle sont nécessaires à la détermination des positions d'acquisition optimales mais ne sont plus utilisés pour la suite de l'opération de contrôle.

Dans le cas où l'une des positions relatives du capteur par rapport à la pièce n'est pas atteignable, par exemple, parce qu'un élément de l'environnement, non déplaçable, empêche le capteur d'atteindre cette position, le résultat des opérations d'optimisation précédentes permet de trouver rapidement un résultat.

Ainsi, selon un premier exemple de solution, comme précisé plus haut, une arête correspond à au moins une position relative du capteur par rapport à la pièce, ce qui signifie qu'à une arête peuvent correspondre plusieurs positions relatives du capteur par rapport à la pièce.

Ces positions sont définies dans le fichier (830, figure 8). Ainsi, si une des positions relatives correspondant à une arête n'est pas atteignable dans l'environnement réel dans lequel est réalisé le contrôle, une première étape consiste à explorer les autres positions relatives, répertoriées dans ledit fichier (830), correspondant à cette même arête.

Dans le cas où cette première étape ne fournit pas de solution, une nouvelle séquence d'acquisition est déterminée à partir du graphe *GVbis.*

Ainsi, dans l'exemple de la figure 14, il est considéré qu'aucune des positions relatives correspondant aux arêtes 925 et 922 du graphe *GVbis* n'est accessible, ce qui revient à interdire que le chemin ne passe par ces arêtes.

En appliquant la même méthode que décrite précédemment, il est possible de déterminer par le même algorithme un nouveau chemin, soit un nouveau graphe *GVbis,* répondant au besoin, en supprimant du graphe de visibilité *GV*(900) les arêtes 922 et 925, la figure 14 donne, en traits gras, un exemple de graphe *GVbis* optimisé dans ce nouveau contexte.

La description ci-avant et les exemples de mise en œuvre montrent que l'invention atteint le but visé et permet de définir une séquence d'acquisitions optimisée pour le contrôle automatique in-situ d'une face ou d'un ensemble de faces d'une pièce dans son environnement de production, ce problème étant, à la base, un problème NP-complet.

Le procédé objet de l'invention obtient ce résultat par la segmentation du modèle CAO de la pièce selon une méthode récursive à partir des caractéristiques du capteur de mesure, puis par la projection des nœuds ainsi obtenus dans un espace virtuel, toujours selon les caractéristiques du capteur, et de ramener ainsi le problème à la résolution d'un problème de graphe pour lequel il existe des heuristiques robustes de résolution.

La personne du métier comprend que si la méthode de Dijkstra est un moyen efficace de résolution de ce problème il existe un arsenal de méthodes de détermination d'un chemin optimal dans un graphe, qui le cas échéant sont utilisables en fonction de la complexité du graphe et du problème.

La méthode de résolution du problème NP complet initial est indissociable de l'opération de contrôle dont elle conditionne la possibilité de réalisation, la précision et la performance en termes de temps de réalisation.

Cette méthode utilise en entrée, selon l'exemple de réalisation exposé, un modèle CAO de la pièce, modèle qui est ensuite échantillonné en un nuage de points. La personne du métier comprend que la mise en œuvre du procédé objet de l'invention est réalisable à partir d'un nuage de points correspondant à la pièce, obtenu par une mesure sur une maquette ou un échantillon physique de cette pièce.

## Revendications

1. Procédé pour le contrôle dimensionnel ou géométrique d'une ou plusieurs faces d'une pièce montée dans un montage de fabrication entre deux opérations de fabrication par des moyens comprenant :
- un capteur de mesure (350) adapté à l'acquisition de points sur la face de la pièce objet du contrôle, défini par une distance d'acquisition, un volume d'acquisition et un cône de direction d'acquisition depuis une position fixe ;
- un robot (360), apte à supporter et à déplacer le capteur (350) ;
- un ordinateur (391) comprenant des moyens de mémoire, des moyens de calculs et des moyens d'affichage, comprenant dans ses moyens de mémoire un modèle numérique tridimensionnel de la pièce, et apte à acquérir les coordonnées des points acquis par le capteur (350) ;
**caractérisé en ce qu'**il comprend des étapes, mises en œuvre par l'ordinateur (391), consistant à :
i. obtenir un modèle numérique CAO de la pièce comprenant la face à contrôler et échantillonner ledit modèle en un nuage de points par tessalation des faces du modèle CAO ;
ii. obtenir les caractéristiques du capteur (350) ;
iii. créer un graphe de visibilité *GV* (900) de la pièce à contrôler en :
iii.a segmentant (1010) le modèle numérique de la pièce en nœuds (901 ...910), chaque nœud étant compris dans le volume d'acquisition du capteur et dont les normales sont à l'intérieur du cône d'acquisition dudit capteur ;
iii.b déterminant (1020) la visibilité de chaque nœud depuis chaque position relative du capteur par rapport audit nœud ;
iii.c déterminant des visibilités communes (1030), ou arêtes (921 ...932), entre les nœuds, deux nœuds étant liés par une arête lorsqu'une acquisition, réalisée dans une position relative fixe du capteur par rapport à la pièce, permet de couvrir simultanément une partie au moins de la surface de chacun des deux nœuds ;
iv. à partir du graphe de visibilité (900) obtenu à l'étape iii) définir (1050) une séquence d'acquisitions permettant de couvrir la ou les faces en un nombre réduit d'acquisitions en recouvrement en définissant le chemin reliant tous les nœuds de la ou des faces par un nombre minimum d'arêtes dans le graphe de visibilité ;
v. mettre en œuvre la séquence d'acquisition (1060) définie à l'étape iv) au moyen du robot (360) en déplaçant le capteur de mesure (350) ou la pièce sur son montage entre les positions permettant de réaliser la séquence d'acquisitions.

2. Procédé selon la revendication 1, dans lequel le modèle CAO correspond à l'état de la pièce dans la gamme de fabrication au moment de l'opération de contrôle.

3. Procédé selon la revendication 1, dans lequel l'étape iiia) comprend, pour une face, la segmentation du nuage de points par dichotomie selon le cône direction d'acquisition du capteur (710, 715) et selon le volume d'acquisition (720, 725) du capteur.

4. Procédé selon la revendication 3, comprenant une étape consistant à obtenir un graphe de connectivité (1221) des faces du modèle CAO de la pièce, et dans lequel l'étape iiia) comprend les étapes consistant à :
- réaliser la segmentation d'une première face (1210) selon la revendication 3 ;
- explorer (1220) le voisinage des nœuds ainsi créés dans une deuxième face voisine de la première face selon le graphe de connectivité (1221) ;
- lorsque les points de la deuxième face et non déjà inclus dans un nœud et les points d'un nœud de la première face entrent dans le volume d'acquisition et le cône de direction d'acquisition du capteur, intégrer (1250) les points de la deuxième face dans ledit nœud.

5. Procédé selon la revendication 1, dans lequel l'étape iiib) comprend les étapes mises en œuvre par l'ordinateur consistant à :
- définir au moyen de la distance d'acquisition du dispositif de mesure un espace voxelisé (600) autour de la pièce ;
- projeter depuis chaque nœud des rayons (611) contenus dans le cône de direction d'acquisition du capteur centré sur la normale (610) au nœud ;
- déterminer les voxels traversés par un rayon (611) ;
- . déterminer une cartographie de la visibilité de chaque face, à partir des voxels ainsi traversés par un rayon (611).

6. Procédé selon la revendication 5, dans lequel, pour la mise en œuvre de l'étape iiib), l'espace voxelisé comprend un ensemble de voxels (650) contenant la pièce et que la projection des rayons (611) est réalisée depuis chaque voxel de cet ensemble comprenant une portion de nœud en utilisant la normale à cette portion de nœud comprise dans ledit voxel.

7. Procédé selon la revendication 1, dans lequel l'étape iv) comprend la détermination d'un sous-graphe de visibilité *GVbis* du graphe de visibilité *GV* (900) par la mise en œuvre d'étapes consistant à :
a) déterminer les nœuds (901, 904, 906, 907, 910) couvrant les faces à contrôler ;
b) calculer, à partir du graphe de visibilité *GV,* les chemins les plus courts reliant un desdits nœuds aux autres nœuds des faces à contrôler ;
c) répéter l'étape b) pour chacun des nœuds déterminés à l'étape a) en écartant successivement les nœuds déjà traités ;
d) à partir du résultat de l'étape c), déterminer un graphe *GVbis* optimisé minimisant le nombre d'arêtes (927, 925, 922, 932, 923, 930) de *GV* d'un chemin passant par tous les nœuds déterminés en a).

8. Procédé selon la revendication 7, dans lequel l'étape b) met en œuvre l'algorithme de Dijkstra.

9. Procédé selon la revendication 1, dans lequel le montage de fabrication est à l'intérieur d'une machine-outil (300) comprenant une zone de travail (310) dans lequel robot (360) est apte à accéder et à déplacer le capteur (350) dans l'espace de travail de la machine et dans lequel l'étape v) est réalisée dans l'espace de travail (310) de la machine-outil.

10. Procédé selon la revendication 9, dans lequel l'étape v) comprend le déplacement de la pièce dans la zone de travail (310) de la machine (300).

11. Procédé selon la revendication 1, dans lequel le montage de fabrication est palettisé et permet le déplacement de la pièce dans son montage entre différents postes de fabrication.

## Patentansprüche

1. Verfahren zur maßlichen oder geometrischen Prüfung einer oder mehrerer Flächen eines Werkstücks, das in einer Fertigungsvorrichtung gehalten wird, zwischen zwei Fertigungsvorgängen, mit den folgenden Mitteln:
- einen Messsensor (350), der für die Erfassung von Punkten auf der Fläche des zu prüfenden Werkstücks geeignet ist, die durch einen Erfassungsabstand, ein Erfassungsvolumen und einen Erfassungsrichtungskegel von einer festen Position aus definiert sind;
- einen Roboter (360), der den Sensor (350) halten und verschieben kann;
- einen Rechner (391), der Speichermittel, Rechenmittel und Anzeigemittel umfasst, in seinen Speichermitteln ein dreidimensionales digitales Modell des Werkstücks enthält und die Koordinaten der vom Sensor (350) erfassten Punkte aufzeichnen kann
, **dadurch gekennzeichnet, dass** er Schritte umfasst, die vom Rechner (391) ausgeführt werden, um:
i) Erhalten eines digitalen CAD-Modells des Werkstücks mit der zu prüfenden Fläche und Abtasten dieses Modells in einer Punktwolke durch eine Mosaikbildung der Flächen des CAD-Modells
ii) Erfassen der Eigenschaften des Sensors (350);
Erzeugen eines Sichtbarkeitsgraphen, *GV*(900), des zu prüfenden Werkstücks durch:
iii. a) Segmentierung (1010) des digitalen Modells des Werkstücks in Knoten (901 ... 910), wobei jeder Knoten im Erfassungsvolumen des Sensors enthalten ist und die Normale zu jedem von ihnen innerhalb des Erfassungskegels des Sensors liegt;
iii. b) Bestimmen der Sichtbarkeit (1020) jedes Knotens aus jeder relativen Position des Sensors in Bezug auf diesen Knoten;
iii. c) Bestimmung gemeinsamer Sichtbarkeiten (1030), die als Kanten (921 ... 932) bezeichnet werden, zwischen den Knoten, wobei zwei Knoten durch eine Kante verbunden sind, wenn eine Erfassung, die in einer festen relativen Position des Sensors in Bezug auf das Werkstück durchgeführt wird, es ermöglicht, gleichzeitig mindestens einen Teil der Oberfläche jedes der beiden Knoten zu erfassen;
iv) ausgehend von dem in Schritt iii) erhaltenen Sichtbarkeitsgraphen (900) Definieren (1050) einer Erfassungssequenz, die es ermöglicht, die Fläche oder die Flächen in einer reduzierten Anzahl von überlappenden Erfassungen zu erfassen, indem der Pfad, der alle Knoten der Fläche oder der Flächen verbindet, durch eine minimale Anzahl von Kanten in dem Sichtbarkeitsgraphen definiert wird;
Ausführen der in Schritt iv) definierten Erfassungssequenz (1060) mit Hilfe des Roboters (360) durch Verschieben des Messfühlers (350) oder des Werkstücks auf seiner Halterung zwischen den Positionen, die die Durchführung der Erfassungssequenz ermöglichen.

2. Verfahren nach Anspruch 1, wobei das CAD-Modell dem Zustand des Werkstücks im Produktionsbereich zum Zeitpunkt des Prüfvorgangs entspricht.

3. Verfahren nach Anspruch 1, bei dem Schritt iii. a) für eine Fläche die Segmentierung der Punktwolke durch eine Dichotomie auf der Grundlage des Erfassungsrichtungskegels des Sensors (710, 715) und des Erfassungsvolumens (720, 725) des Sensors umfasst.

4. Verfahren nach Anspruch 3, umfassend einen Schritt des Erhaltens eines Konnektivitätsgraphen (1221) der Flächen des CAD-Modells des Werkstücks, und wobei Schritt iii. a) die folgenden Schritte umfasst:
- Segmentierung einer ersten Fläche (1210) nach Anspruch 3;
- Untersuchung (1220) der Nachbarschaft der so entstandenen Knoten in einer zweiten Fläche, die der ersten Fläche benachbart ist, gemäß dem Konnektivitätsgraphen (1221);
- Wenn die Punkte der zweiten Fläche, die nicht bereits in einem Knoten enthalten sind, und die Punkte eines Knotens der ersten Fläche in das Erfassungsvolumen und den Erfassungsrichtungskegel des Sensors passen, werden die Punkte der zweiten Fläche in den genannten Knoten integriert (1250).

5. Verfahren nach Anspruch 1, wobei Schritt iii. b) die folgenden computerimplementierten Schritte umfasst:
- Definieren eines voxelisierten Raums (600) um das Werkstück mit Hilfe der Erfassungsdistanz des Messgeräts;
- Projektion eines Linienbündels (611) von jedem Knotenpunkt aus, das im Kegel der Erfassungsrichtung des Sensors enthalten ist und auf die Normale (610) zum Knotenpunkt zentriert ist;
- Bestimmung der Voxel, die von einer Linie durchquert werden (611);
- Bestimmung einer Abbildung der Sichtbarkeit jeder Fläche anhand der Voxel, die von einer Linie durchquert werden (611).

6. Verfahren nach Anspruch 5, wobei zur Durchführung von Schritt iii. b) der voxelierte Raum einen Satz von Voxeln (650) umfasst, die das Werkstück enthalten, und die Projektion der Linien (611) von jedem Voxel dieses Satzes, der einen Knotenabschnitt umfasst, unter Verwendung der in dem Voxel enthaltenen Normalen zu diesem Knotenabschnitt durchgeführt wird.

7. Verfahren nach Anspruch 1, wobei Schritt iv) das Bestimmen eines Sichtbarkeitsuntergraphen *GVbis* des Sichtbarkeitsgraphen *GV* (900) durch Ausführen der folgenden Schritte umfasst:
a) Bestimmung der Knoten (901, 904, 906, 907, 910), die die zu prüfenden Flächen abdecken;
b) aus dem Sichtbarkeitsgraphen *GV* die kürzesten Wege zu berechnen, die einen der genannten Knoten mit den anderen Knoten der zu untersuchenden Flächen verbinden;
c) Wiederholung von Schritt b) für jeden der in Schritt a) ermittelten Knoten, wobei die bereits bearbeiteten Knoten nacheinander verworfen werden;
d) aus dem Ergebnis von Schritt c) einen optimierten Graphen *GVbis* bestimmen, der die Anzahl der Kanten (927, 925, 922, 932, 923, 930) von *GV* eines Pfades minimiert, der durch alle in a) bestimmten Knoten verläuft.

8. Verfahren nach Anspruch 7, wobei in Schritt b) ein Dijkstra-Algorithmus implementiert wird

9. Verfahren nach Anspruch 1, bei dem sich die Arbeitsvorrichtung in einer Werkzeugmaschine (300) befindet, die einen Arbeitsbereich (310) umfasst, in dem der Roboter (360) so eingerichtet ist, dass er auf den Sensor (350) im Arbeitsbereich der Maschine zugreifen und ihn bewegen kann, und bei dem Schritt v) im Arbeitsbereich (310) der Werkzeugmaschine durchgeführt wird.

10. Verfahren nach Anspruch 9, wobei Schritt v) das Bewegen des Werkstücks durch den Arbeitsbereich (310) der Werkzeugmaschine (300) umfasst.

11. Verfahren nach Anspruch 1, wobei die Arbeitsvorrichtung palettiert ist und es ermöglicht, dass das Teil in seiner Vorrichtung zwischen verschiedenen Fertigungsstationen bewegt werden kann.

## Claims

1. A method for the dimensional or geometric inspection of one or more faces of a workpiece hold in a manufacturing fixture, between two manufacturing operations, by means comprising:
- a measurement sensor (350) adapted to the acquisition of points on the face of the part subject to the inspection, defined by an acquisition distance, an acquisition volume and an acquisition direction cone from a fixed position;
- a robot (360), capable of holding and moving the sensor (350);
- a computer (391) comprising memory means, computation means and display means, comprising in its memory means a three-dimensional digital model of the part, and capable of recording the coordinates of the points acquired by the sensor(350 )
**characterized by** that it comprises steps, implemented by the computer (391), of:
i) obtaining a digital CAD model of the workpiece comprising the face to be inspected and sampling this model in a point cloud by a tessellation of the faces of said CAD model
ii) obtaining the characteristics of the sensor (350);
creating a visibility graph, *GV* (900), of the workpiece to be inspected by:
iii.a) segmenting (1010) the digital model of the workpiece into nodes (901 ... 910), each node being included in the acquisition volume of the sensor and the normal to each of them being inside the acquisition cone of said sensor;
iii.b) determining the visibility (1020) of each node from each relative position of the sensor with respect to said node;
iii.c) determining common visibilities (1030), designated as edges (921 ... 932), between the nodes, two nodes being connected by an edge when an acquisition, carried out in a fixed relative position of the sensor with respect to the workpiece, makes it possible to simultaneously cover at least a portion of the surface of each of the two nodes;
iv) from the visibility graph (900) obtained in step iii) defining (1050) a sequence of acquisitions making it possible to cover the face, or the faces, in a reduced number of overlapping acquisitions by defining the path connecting all the nodes of the face, or the faces, by a minimum number of edges in the visibility graph;
implementing the acquisition sequence(1060) defined in step iv) by means of the robot (360) by moving the measurement sensor (350) or the workpiece on its fixture between the positions allowing the acquisitions sequence to be carried out.

2. The method of claim 1, wherein the CAD model corresponds to the state of the workpiece in the production range at the time of the inspection operation.

3. The method of claim 1, in which step iii.a) comprises, for one face, the segmentation of the point cloud by a dichotomy based on the acquisition direction cone of the sensor (710, 715) and on the acquisition volume (720 , 725) of the sensor.

4. The method of claim 3, comprising a step of obtaining a connectivity graph (1221) of the faces of the CAD model of the workpiece, and wherein step iii.a) comprises the steps of:
- segmenting a first face (1210) according to claim 3;
- exploring (1220) the neighborhood of the nodes thus created in a second face neighboring the first face according to the connectivity graph (1221);
- when the points of the second face that are not already included in a node and the points of a node of the first face fit the acquisition volume and the acquisition direction cone of the sensor, integrating (1250) the points of the second face in said node.

5. The method of claim 1, wherein step iii.b) comprises the computer implemented steps of
- defining by means of the acquisition distance of the measuring device a voxelized space (600) around the workpiece;
- projecting from each node a beam of lines (611) contained in the acquisition direction cone of the sensor centered on the normal (610) to the node;
- determining the voxels traversed by a line (611);
- . determining a mapping of the visibility of each face, from the voxels thus traversed by a line (611).

6. The method of claim 5, wherein, for carrying out step iii.b), the voxelized space comprises a set of voxels (650) containing the workpiece and the projection of the lines (611) is carried out from each voxel of this set comprising a node portion using the normal to this node portion included in said voxel.

7. The method of claim 1, wherein step iv) comprises determining a visibility subgraph *GVbis* of the visibility graph *GV* (900) by performing the steps of:
a) determining the nodes (901, 904, 906, 907, 910) covering the faces to be inspected;
b) computing, from the visibility graph *GV,* the shortest paths connecting one of said nodes to the other nodes of the faces to be inspected;
c) repeating step b) for each of the nodes determined in step a), successively discarding the nodes already processed;
d) from the result of step c), determining an optimized graph *GVbis* minimizing the number of edges (927, 925, 922, 932, 923, 930) of *GV* of a path passing through all the nodes determined in a).

8. The method of claim 7, wherein step b) implements a Dijkstra's algorithm

9. The method of claim 1, wherein the work fixture is within a machine tool (300) comprising a work area (310) in which the robot (360) is adapted to access and move the sensor (350) in the workspace of the machine and wherein step v) is performed in the work area (310) of the machine tool.

10. The method \of claim 9, wherein step v) includes moving the workpiece through the work area (310) of the machine tool (300).

11. The method of claim 1, wherein the work fixture is palletized and allows the part to be moved in its fixture between different manufacturing stations.
